# DEMANDE DE BREVET EUROPEEN

(11) **EP 2 453 167 A1**
(43) Date de publication de la demande: **16.05.2012**
(21) Numéro de dépôt: 11189111.5
(22) Date de dépôt: 15.11.2011
(51) Int. Cl.: F21S 8/10, F21S 8/12, F21Y 101/02, F21Y 105/00, F21W 101/10

(54) **Dispositif d'éclairage et/ou de signalisation d'un véhicule automobile comprenant une source surfacique de lumière**

(30) Priorité: 15.11.2010 FR 1059365
(71) Demandeur: Valeo Vision, 93012 Bobigny (FR)
(72) Inventeur: Puente, Jean-Claude, 93190 LIVRY GARGAN (FR); Albou, Pierre, 75013 PARIS (FR)

(57) **Abrégé**

Dispositif optique (1) d'un véhicule automobile, notamment un dispositif d'éclairage et/ou de signalisation d'un véhicule automobile, comprenant une source principale de lumière (5), une source auxiliaire de lumière (3) et un réflecteur (2), caractérisé en ce que la source auxiliaire de lumière est surfacique et en ce que le réflecteur et les sources principale et auxiliaire de lumière sont agencés de sorte qu'au moins certains rayons émis par la source principale de lumière traversent, après réflexion sur le réflecteur, la source auxiliaire de lumière.

## Description

La présente invention concerne un dispositif optique, notamment pour véhicule automobile, tel qu'un dispositif d'éclairage et/ou de signalisation ayant notamment une fonction photométrique utile pour la circulation sur route du véhicule, permettant au véhicule d'être vu par d'autres véhicules ou au conducteur dudit véhicule de voir à l'extérieur.

Dans le domaine de la signalisation, tout comme dans celui de l'éclairage, de nombreuses contraintes réglementaires laissent peu de place pour modifier l'aspect des feux à l'état allumé, puisque la photométrie des faisceaux lumineux est imposée dans une très large mesure. Cependant, le style et l'esthétique sont des données très importantes pour ce type de produit, et les équipementiers automobiles cherchent à donner une "signature" à leurs produits, pour qu'ils soient aisément identifiables par l'utilisateur final. Or, si cette "signature" est claire de jour, quand le feu ou le projecteur est éteint, il n'en est pas de même la nuit, quand ils sont allumés. En effet, de nuit, les dispositifs d'éclairage et/ou de signalisation ne sont généralement pas visibles sur toute leur surface extérieure: seules les plages éclairantes des fonctions optiques de base sont éclairées. Ainsi, un feu de signalisation est composé de plusieurs plages éclairantes correspondant aux différentes fonctions optiques à réaliser, dont des fonctions allumées en continu comme la fonction lanterne, et des fonctions allumées seulement par périodes.

Les dispositifs d'éclairage et/ou de signalisation ont donc en fait deux aspects bien différents selon qu'ils sont allumés ou éteints. La tendance actuelle à augmenter la surface des projecteurs et des feux ne fait qu'accentuer encore cette différence. C'est tout particulièrement le cas de feux à grande surface extérieure du type feux avec "retour d'aile", c'est-à-dire des feux qui s'étendent non seulement sur la face avant ou arrière du véhicule, mais aussi sur le flanc de celui-ci au niveau de la partie de raccordement d'une aile à cette face avant ou arrière : on a dans ce cas précis souvent une forte disparité entre la surface allumée utile et la surface extérieure complète du feu.

On a donc tendance à perdre, de nuit, la "signature" des dispositifs d'éclairage et/ou de signalisation. Par ailleurs et de façon plus générale, il existe un besoin pour mieux diversifier/ajuster l'aspect des dispositifs d'éclairage et/ou de signalisation quand au moins une de leur fonction optique est allumée.

Pour remédier à ce problème, on connaît du document EP 1 434 000 dispositif de signalisation comprenant une source de lumière assurant une fonction de signalisation et un écran recouvrant cette source de lumière. Cet écran constitue en fait un guide de lumière pour guider la lumière d'une source de lumière auxiliaire prévue sur un pourtour de l'écran jusqu'à des zones de diffusions prévus sur l'écran pour qu'à ces endroits, la lumière générée par la source de lumière auxiliaire puisse sortir de l'écran et être ainsi visible. Néanmoins, une telle solution pose un certain nombre de problèmes, notamment des problèmes de complexité de réalisation. En effet, il faut d'une part prévoir la source de lumière auxiliaire et l'agencer sur le pourtour de l'écran et, d'autre part, réaliser sur l'écran un certain nombre de motifs ou de reliefs permettant à la lumière de sortir de l'écran. Ces contraintes rendent le dispositif de signalisation difficile à réaliser et coûteux.

Par ailleurs, il apparaît intéressant de pouvoir réaliser des dispositifs d'éclairage et/ou de signalisation permettant d'intégrer différentes fonctions d'éclairage et/ou de signalisation dans un encombrement donné.

Le but de l'invention est de fournir un dispositif optique remédiant aux inconvénients mentionnés précédemment et améliorant les dispositifs optiques connus de l'art antérieur. En particulier, l'invention permet de réaliser un dispositif optique simple, ayant un aspect original, assurant différentes fonctions d'éclairage et/ou de signalisation et présentant un faible encombrement.

Selon l'invention, le dispositif optique d'un véhicule automobile, notamment un dispositif d'éclairage et/ou de signalisation d'un véhicule automobile, comprend une source principale de lumière, une source auxiliaire de lumière et un réflecteur. La source auxiliaire de lumière est surfacique et le réflecteur et les sources principale et auxiliaire de lumière sont agencés de sorte qu'au moins certains rayons émis par la source principale de lumière traversent, après réflexion sur le réflecteur, la source auxiliaire de lumière. Ainsi, il est possible de réaliser un dispositif optique compact, assurant différentes fonctions d'éclairage et/ou de signalisation et présentant un aspect original.

L'aire d'émission de la source surfacique de lumière peut être supérieure à 10 cm².

La source surfacique de lumière comprend de préférence une diode électroluminescente organique, notamment une diode électroluminescente organique du type conformable. Ainsi, il est possible de réaliser de manière simple un dispositif selon l'invention. Cette technologie présente de nombreux avantages, évolue rapidement et son coût est en baisse. La diode électroluminescente organique peut être lambertienne. Notamment, la diode électroluminescente organique peut consister en un film déformable appliqué sur une surface d'une pièce transparente ou elle peut être imprimée sur une surface d'une pièce transparente. Ainsi, la surface de la diode électroluminescente peut être gauche.

Le dispositif optique peut comprendre un boîtier fermé par une glace de fermeture à l'intérieur duquel se trouvent les sources principale et auxiliaire.

La source auxiliaire de lumière peut se trouver interposée entre la glace de fermeture et la source principale de lumière. Ainsi, on obtient un aspect homogène du dispositif d'éclairage et/ou de signalisation. Les rayons lumineux émis par la source principale de lumière doivent traverser la source auxiliaire avant d'atteindre la glace de fermeture.

Le réflecteur peut comprendre un réflecteur parabolique, un réflecteur à facette, un réflecteur à surface complexe ou un réflecteur elliptique. Ainsi, le dispositif selon l'invention peut être utilisé pour la réalisation de dispositifs d'éclairage du type parabolique et du type elliptique. La demande de brevet EP 373 065 décrit des exemples de surfaces complexes. On peut notamment dire qu'une surface complexe est une surface capable de former un faisceau lumineux par exemple de type code, sans utiliser de coupelle occultant une partie de la surface et sans utiliser de glace striée. Plus précisément, une surface complexe peut être formée d'un assemblage de secteurs élémentaires, chaque secteur se raccordant au secteur immédiatement voisin le long de lignes globalement verticales. Chaque secteur est avantageusement généré par une génératrice horizontale d'où part un ensemble de courbes verticales vers le haut puis vers le bas. La génératrice horizontale est par exemple convexe et son profil détermine la répartition horizontale du faisceau généré par le secteur. Les génératrices des secteurs sont choisies pour que les rayons issus de la source soient réfléchis par la surface en étant orienté vers le bas afin de former la coupure, par exemple la coupure du code. Les courbes verticales sont par exemple des arcs de parabole. Les foyers de chaque parabole partant vers le haut sont en général distincts des foyers des paraboles partant vers le bas. Dans certains cas, les arcs peuvent différer d'une parabole et peuvent être des courbes coplanaires pouvant se définir par un ensemble de foyers (à chaque hauteur, on associe un foyer différent).

La source principale de lumière peut comprendre plusieurs éléments émettant de la lumière. Ainsi, différentes zones peuvent être constituées, ces zones émettant des rayons lumineux de couleurs différentes et/ou étant activées indépendamment les unes des autres.

Le réflecteur peut être une face réfléchissante d'une diode électroluminescente organique.

La source auxiliaire de lumière peut comprendre plusieurs éléments surfaciques émettant de la lumière, notamment plusieurs diodes électroluminescentes organiques. Ainsi, différentes zones peuvent être constituées, ces zones émettant des rayons lumineux de couleurs différentes ou non et/ou étant activées indépendamment les unes des autres. Ces différentes zones peuvent permettre de suivre au plus près le galbe d'une glace de fermeture.

La source principale de lumière et la source auxiliaire de lumière peuvent être activées simultanément ou indépendamment l'une de l'autre.

De préférence, l'essentiel, voire l'intégralité, d'une fonction d'éclairage et/ou de signalisation est assuré par la source principale.

Le dispositif peut être destiné à assurer une fonction de signalisation d'un véhicule automobile.

Un autre objet de l'invention est un véhicule automobile comprenant un dispositif d'éclairage et/ou de signalisation défini précédemment.

Le dessin annexé représente, à titre d'exemples, différents modes de réalisation d'un dispositif optique selon l'invention.
La figure 1 est un schéma de principe en coupe d'un premier mode de réalisation d'un dispositif optique selon l'invention.
La figure 2 est un schéma de principe en coupe d'un deuxième mode de réalisation d'un dispositif optique selon l'invention.
La figure 3 est un schéma de principe en coupe d'un troisième mode de réalisation d'un dispositif optique selon l'invention.
La figure 4 est un schéma de principe d'un mode de réalisation d'une source surfacique de lumière pouvant être utilisé pour la mise en oeuvre d'un dispositif optique selon l'invention.
La figure 5 est un schéma de principe d'un mode de réalisation d'une autre source surfacique de lumière pouvant être utilisé pour la mise en oeuvre d'un dispositif optique selon l'invention.

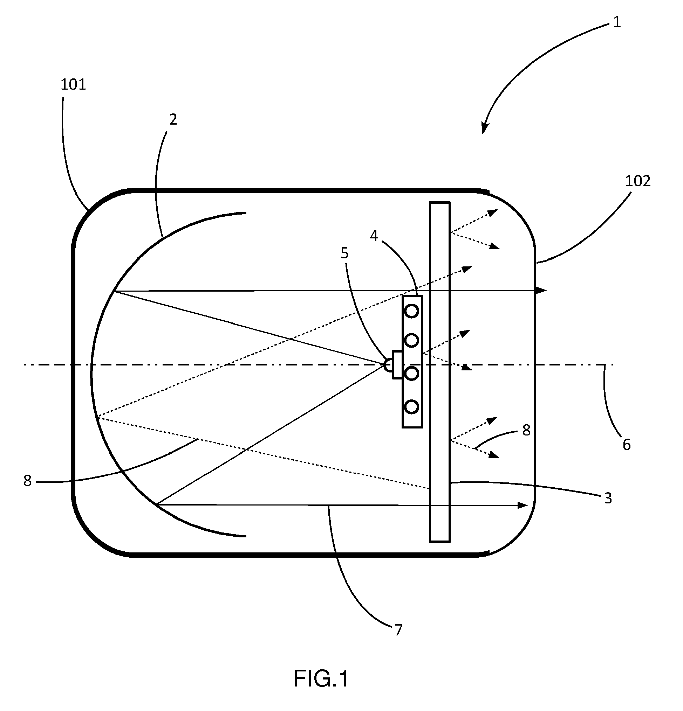

Dans un premier mode de réalisation, décrit ci-après en référence à la figure 1, le dispositif optique 1 est un dispositif d'éclairage et/ou de signalisation comprenant un boîtier 101 fermé par une glace de fermeture 102. Le dispositif présente un axe optique 6. Le dispositif d'éclairage et/ou de signalisation comprend au moins une source principale de lumière 5 et au moins une source auxiliaire de lumière 3. La source principale de lumière émet des rayons lumineux 7 et produit l'essentiel de la lumière permettant d'assurer une première fonction d'éclairage et/ou de signalisation. De préférence, la source principale de lumière produit l'intégralité de la lumière permettant d'assurer la première fonction d'éclairage et/ou de signalisation. De préférence, la source auxiliaire de lumière émet des rayons lumineux 8 et produit un effet allumé particulier du dispositif d'éclairage et/ou de signalisation. Notamment, la source auxiliaire de lumière peut permettre d'homogénéiser l'aspect du dispositif d'éclairage et/ou de signalisation lorsque celui-ci est allumé. Alternativement ou complémentairement, la source auxiliaire de lumière produit l'essentiel de la lumière permettant d'assurer une deuxième fonction d'éclairage et/ou de signalisation. De préférence, la source auxiliaire de lumière produit l'intégralité de la lumière permettant d'assurer la deuxième fonction d'éclairage et/ou de signalisation. Notamment dans le cas de deux fonctions de même couleur, on peut alimenter simultanément les sources principale et auxiliaire, la source principale étant sous alimentée dans la réalisation de la deuxième fonction.

De préférence, la source auxiliaire de lumière est surfacique et transparente ou translucide. Elle émet donc de la lumière sur ses deux faces opposées. Elle comprend de préférence une diode électroluminescente organique ayant deux électrodes transparentes. Dans ce premier mode de réalisation, la source auxiliaire de lumière 3 est interposée entre la glace de fermeture 102 et la source principale de lumière 5. Ainsi, les rayons lumineux 8 émis par une première face de la source auxiliaire de lumière 3 atteignent directement la glace de fermeture pour sortir du dispositif d'éclairage et/ou de signalisation. Cependant, les rayons lumineux 8 émis par la deuxième face de la source auxiliaire de lumière 3 atteignent indirectement la glace de fermeture : ils doivent au préalable être réfléchis par un réflecteur 2 (ou par une face réfléchissante d'un autre organe comme une face d'un échangeur thermique 4 permettant de refroidir la source principale 5) puis traverser la source auxiliaire de lumière. De même, les rayons lumineux 7 émis par la source principale de lumière 5 atteignent indirectement la glace de fermeture : ils doivent au préalable être réfléchis par le réflecteur 2 puis traverser la source auxiliaire de lumière. Des faces réfléchissantes mentionnées précédemment peuvent aussi être utilisées pour remédier à la présence de tout autre organe non transparent ou non translucide entre la source auxiliaire de lumière et le réflecteur, notamment un organe de fixation mécanique de la source principale de lumière ou un circuit d'alimentation électrique de la source principale.

Il est à noter qu'une partie des rayons lumineux est absorbée lors de la traversée de la source auxiliaire de lumière.

Dans ce premier mode de réalisation, le réflecteur 2 est un miroir au moins sensiblement parabolique. La source principale de lumière 5 est de préférence positionnée sensiblement au foyer du miroir parabolique de sorte que les rayons émis par la source principale de lumière soient renvoyés au moins sensiblement parallèlement les uns aux autres après réflexion sur le réflecteur.

Les rayons émis par la source principale de lumière selon l'axe optique ou sensiblement selon l'axe optique 6 sont réfléchis par le réflecteur 2 vers la source principale de lumière ou vers un échangeur thermique 4 destiné à refroidir la source principale de lumière. Ainsi, ces rayons réfléchis ne traversent pas la source auxiliaire de lumière. Pour éviter cela, le réflecteur 2 peut présenter une surface convexe au voisinage de l'axe optique 6 de sorte à faire diverger de part et d'autre de l'échangeur thermique 4 les rayons émis par la source principale de lumière sensiblement selon l'axe optique 6. Des surfaces du type mentionné précédemment peuvent aussi être utilisées pour remédier à la présence de tout autre organe non transparent ou non translucide entre la source principale de lumière et la source auxiliaire de lumière, notamment un organe de fixation mécanique de la source principale de lumière ou un circuit d'alimentation électrique de la source principale.

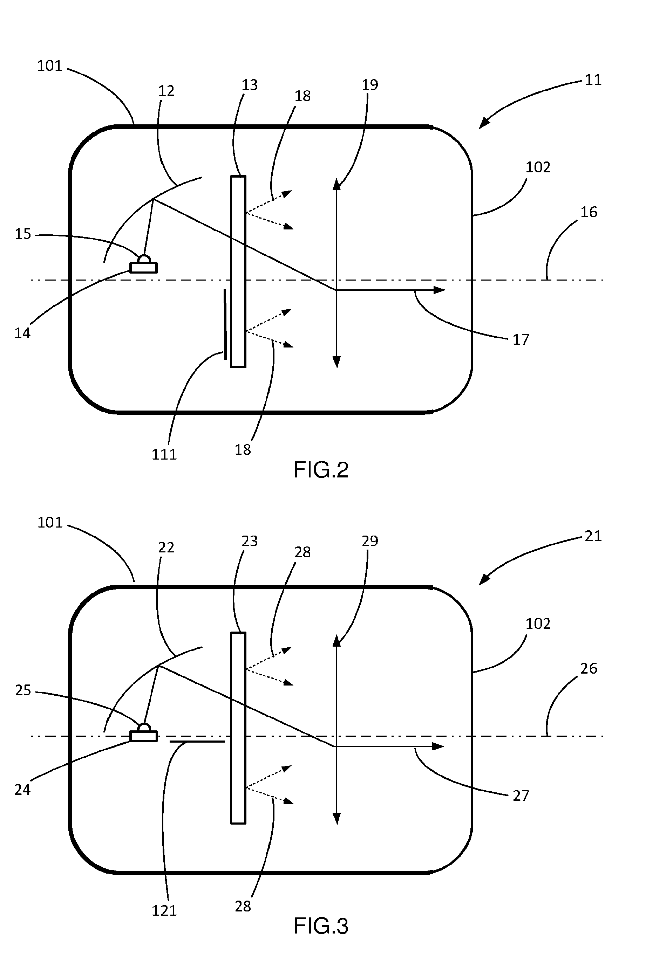

Dans un deuxième mode de réalisation, décrit ci-après en référence à la figure 2, le dispositif d'éclairage et/ou de signalisation 11 diffère de celui décrit précédemment en ce que le réflecteur 12 est du type elliptique et en ce qu'il présente une lentille 19 convergente. L'axe optique du dispositif est référencé 16. Le dispositif d'éclairage et/ou de signalisation comprend, outre le réflecteur 12 et la lentille 19 précédemment mentionnés, une source principale de lumière 15, une source auxiliaire de lumière 13 et un échangeur thermique 14 pour refroidir la source principale de lumière. Le dispositif d'éclairage et/ou de signalisation peut également comprendre un cache 111. Ce cache peut par exemple contribuer à la mise en forme d'un faisceau lumineux assurant une fonction d'éclairage du type feux de croisement. La source principale de lumière est positionnée au niveau d'un premier foyer du réflecteur elliptique 12 et le foyer de la lentille convergente 19 est positionné au niveau d'un deuxième foyer du réflecteur elliptique. Ainsi, les rayons lumineux 17 émis par la source principale de lumière sont réfléchis par le réflecteur 12 avant d'être déviés par la lentille 19 et de sortir du dispositif. En particulier, les rayons lumineux 17 émis par la source principale de lumière, passant par le foyer commun à la lentille et au réflecteur elliptique et qui sont réfléchis par le réflecteur 12 avant d'être déviés par la lentille 19 sortent du dispositif au moins sensiblement parallèles à l'axe optique 16. La source auxiliaire de lumière 13 est de préférence positionnée entre le réflecteur et la lentille sur le chemin des rayons lumineux 17. La source auxiliaire de lumière constitue plusieurs dioptres optiques qu'il faut prendre en compte dans le dispositif de sorte que les rayons lumineux 17 sortent de la lentille au moins sensiblement parallèles à l'axe optique 16. Le cache 111 est de préférence positionné entre le réflecteur et la lentille.

Dans ce deuxième mode de réalisation, les rayons lumineux 18 émis par une première face de la source auxiliaire de lumière 3 atteignent indirectement la glace de fermeture après avoir traversé la lentille 19. Certains rayons lumineux 18 émis par la deuxième face de la source auxiliaire de lumière 3 atteignent indirectement la glace de fermeture : ils doivent au préalable être réfléchis par le réflecteur 12 (ou par une face réfléchissante du cache 111), puis traverser la source auxiliaire de lumière, puis traverser la lentille 19. De même, les rayons lumineux 17 émis par la source principale de lumière 15 atteignent indirectement la glace de fermeture : ils doivent au préalable être réfléchis par le réflecteur 12 puis traverser la source auxiliaire de lumière, puis traverser la lentille 19.

Dans un troisième mode de réalisation, décrit ci-après en référence à la figure 3, le dispositif d'éclairage et/ou de signalisation 21 diffère de celui décrit précédemment en ce qu'il ne comprend pas de cache mais une plieuse 121. Les autres éléments sont identiques et sont identifiés avec des références présentant un « 2 » pour le chiffre des dizaines, alors qu'ils présentaient un « 1 » pour le chiffre des dizaines dans le mode de réalisation précédent.

Dans les différents modes de réalisation, le réflecteur 2, 12 ou 22 peut être constitué par une face arrière réfléchissante d'une diode électroluminescente organique. Cette diode électroluminescente organique peut être activée simultanément à la source auxiliaire de lumière et contribuer ainsi à assurer une fonction d'éclairage et/ou de signalisation avec la source auxiliaire. Alternativement, cette diode électroluminescente organique peut être activée indépendamment de la source auxiliaire de lumière et contribuer ainsi à assurer une fonction d'éclairage et/ou de signalisation, par exemple une fonction lanterne, distincte de celle assurée par la source auxiliaire, par exemple feu diurne.

Les rayons lumineux émis par la source principale de lumière et les rayons lumineux émis par la source auxiliaire de lumière peuvent être émis au moins sensiblement selon la même direction. Néanmoins, ils peuvent être aussi émis selon des directions très différentes pouvant par exemple former entre elles un angle allant jusqu'à 90° ou plus. En particulier, notamment dans des applications de feux à grande surface extérieure du type feux avec "retour d'aile", les rayons lumineux émis par la source principale de lumière et les rayons lumineux émis par la source auxiliaire de lumière peuvent être localement émis au moins sensiblement selon la même direction et localement émis selon des directions très différentes. En effet, la fonction d'éclairage et/ou de signalisation peut être réalisée au moins essentiellement par la source principale. La source auxiliaire peut avoir une fonction de signature ou une autre fonction d'éclairage et/ou de signalisation.

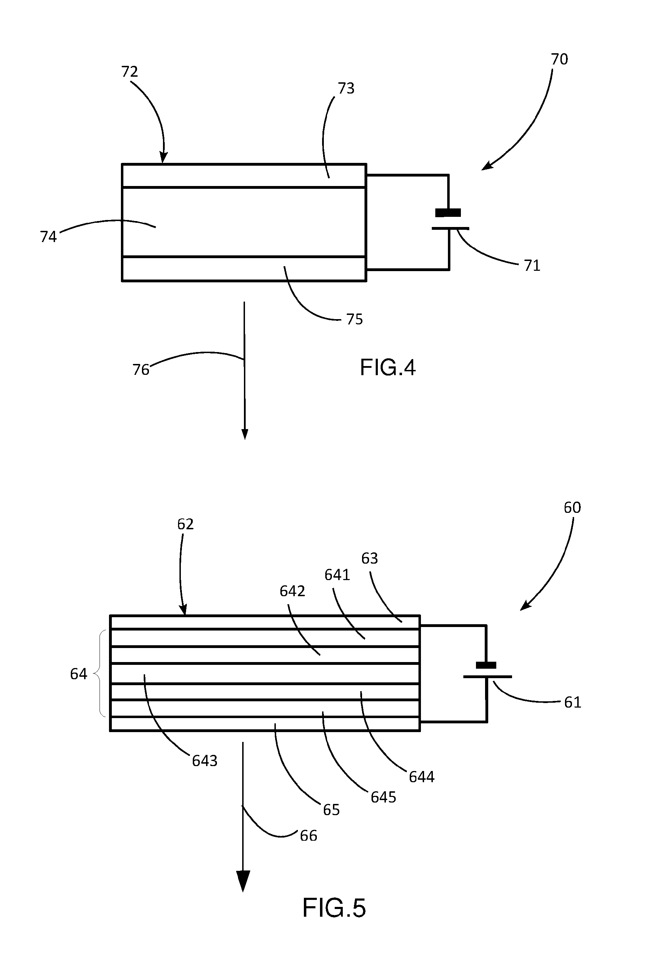

Dans les différents modes de réalisation, la source auxiliaire de lumière est de type surfacique et transparente ou translucide : elle comprend au moins une source surfacique de lumière, de préférence une diode électroluminescente organique. La ou les sources surfaciques de lumière peuvent être de tous types. Néanmoins, les sources de lumière du type diode électroluminescente organique sont préférées. Un premier mode de réalisation d'un tel dispositif 70 de diode électroluminescente organique est représenté à la figure 4. Le dispositif comprend une diode électroluminescente organique 72 et un générateur de tension électrique 71. La diode électroluminescente organique comprend plusieurs couches : une cathode 73, une anode 75 et une couche organique 74. Lorsque la couche organique est soumise à une tension électrique, elle émet un rayonnement lumineux 76 se propageant au travers de l'anode 75 qui est transparente relativement à ce rayonnement.

Préférentiellement, l'aire émettrice de la source surfacique de lumière est supérieure à 10 cm².

La source auxiliaire de lumière peut comprendre plusieurs éléments surfaciques émettant de la lumière, notamment plusieurs diodes électroluminescentes organiques. Les différents éléments surfaciques de lumière peuvent être activés simultanément ou indépendamment les uns des autres. Les différents éléments peuvent être disposés jointivement ou non, éventuellement en orientant leurs plans d'émission différemment.

La source auxiliaire de lumière peut être lambertienne ou non.

De préférence, la source auxiliaire est réalisée par une diode électroluminescente organique du type conformable. Par exemple, elle peut être réalisée par un film qu'il est possible de déposer sur une surface, notamment sur une surface gauche. Alternativement, elle peut être réalisée grâce à une technique d'impression des différentes couches, notamment par une technique d'impression sur une surface gauche. Ainsi, la source auxiliaire de lumière peut avoir une forme permettant de suivre le galbe de la glace de fermeture 102 du dispositif d'éclairage et/ou de signalisation.

La source principale de lumière peut être de tout type. De préférence, elle comprend une ou plusieurs diodes électroluminescentes ou une ou plusieurs lampes à décharge. Dans l'état actuel des technologies, on évite de choisir une source principale de lumière émettant un flux thermique important de sorte à ne pas endommager la source auxiliaire de lumière lorsque celle-ci comprend une diode électroluminescente organique.

Un deuxième mode de réalisation d'un dispositif 60 de diode électroluminescente organique est représenté à la figure 5. Le dispositif comprend une diode électroluminescente organique 62 et un générateur de tension électrique 61. La diode électroluminescente organique comprend plusieurs couches : une cathode 63, une anode 65 et une couche organique 64. Lorsque la couche organique est soumise à une tension électrique, elle émet un rayonnement lumineux 66 se propageant au travers de l'anode 65 qui est transparente relativement à ce rayonnement. La couche organique peut éventuellement comprendre différentes strates 641 à 645 en matériaux organiques différents. De préférence, on utilise des diodes électroluminescentes organiques comprenant des strates supplémentaires. En plus de la strate 643 émettrice de lumière, la couche organique comprend une strate 641 favorisant le transport des électrons jusqu'à la strate émettrice 643 et une strate 645 favorisant le transport des trous jusqu'à la strate émettrice 643. La couche organique peut aussi comprendre une strate 642 bloquant les trous provenant des strates inférieures (643 à 645) et une strate 644 bloquant les électrons provenant des strates supérieures (641 à 643). L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677.

Avantageusement, les sources principale et auxiliaire de lumière peuvent émettre de la lumière de couleurs différentes, les fonctions assurées par les deux sources pouvant nécessiter des couleurs différentes.

Les sources principale et auxiliaire de lumière peuvent aussi être activées simultanément.

La source principale de lumière et la source auxiliaire de lumière peuvent n'assurer qu'une fonction d'éclairage et/ou de signalisation. La source auxiliaire de lumière complète alors la source principale de lumière pour assurer la fonction d'éclairage et/ou de signalisation.

Dans le cas où la source auxiliaire de lumière est réalisée par plusieurs éléments surfaciques émettant de la lumière, il est possible de réaliser plusieurs zones pouvant être allumées indépendamment les unes des autres. Il est également possible d'éteindre une zone lorsque la source principale est allumée.

Le dispositif d'éclairage et/ou de signalisation selon l'invention permet par exemple d'assurer l'une des fonctions suivantes : éclairage de route, éclairage de croisement, éclairage antibrouillard, signalisation de position du véhicule, signalisation de changement de direction, signalisation de recul, signalisation de freinage, signalisation en cas de brouillard.

Par exemple, la source principale peut assurer l'une des fonctions suivantes : clignotant, feu stop, feu antibrouillard, feu de croisement ou feu de route.

Par exemple, la source auxiliaire peut assurer les fonctions suivantes : lanterne et/ou feu diurne.

Les couples de fonctions assurés par la source principale et la source auxiliaire peuvent être variés. A titre d'exemple illustratif, les sources principale et auxiliaire de lumière assurent les couples de fonctions suivants :

| Source principale | Source secondaire |
|---|---|
| Clignotant (encore appelé indicateur de direction) | lanterne et/ou feu diurne |
| feu stop | lanterne |
| feu antibrouillard | lanterne et/ou feu diurne |
| feu de croisement | lanterne et/ou feu diurne |
| feu de route | lanterne et/ou feu diurne |
| Feu diurne (encore appelé DRL pour « *Day running light* ») | Clignotant |

D'autres couples de fonctions assurés par la source principale et la source auxiliaire pourraient être réalisés.

L'invention peut également être appliquée à un éclairage d'habitacle d'un véhicule automobile, notamment à un plafonnier.

## Revendications

1. Dispositif optique (1 ; 11 ; 21) d'un véhicule automobile, notamment un dispositif d'éclairage et/ou de signalisation d'un véhicule automobile, comprenant une source principale de lumière (5 ; 15 ; 25), une source auxiliaire de lumière (3 ; 13 ; 23) et un réflecteur (2 ; 12 ; 22), **caractérisé en ce que** la source auxiliaire de lumière est surfacique et **en ce que** le réflecteur et les sources principale et auxiliaire de lumière sont agencés de sorte qu'au moins certains rayons émis par la source principale de lumière traversent, après réflexion sur le réflecteur, la source auxiliaire de lumière.

2. Dispositif selon la revendication précédente, **caractérisé en ce que** l'aire d'émission de la source surfacique de lumière est supérieure à 10 c_{m2.}

3. Dispositif selon la revendication 1 ou 2, **caractérisé en ce que** la source surfacique de lumière comprend une diode électroluminescente organique.

4. Dispositif selon l'une des revendications précédentes, **caractérisé en ce que** la diode électroluminescente organique est du type conformable.

5. Dispositif selon l'une des revendications précédentes, **caractérisé en ce que** le dispositif comprend un boîtier (101) fermé par une glace de fermeture (102) à l'intérieur duquel se trouvent les sources principale et auxiliaire.

6. Dispositif selon la revendication précédente, **caractérisé en ce que** la source auxiliaire de lumière se trouve interposée entre la glace de fermeture et la source principale de lumière.

7. Dispositif selon l'une des revendications précédentes, **caractérisé en ce que** le réflecteur (2 ; 12 ; 22) comprend un réflecteur parabolique (2).

8. Dispositif selon l'une des revendications 1 à 6, **caractérisé en ce que** le réflecteur (2 ; 12 ; 22) comprend un réflecteur elliptique (12 ; 22).

9. Dispositif selon l'une des revendications précédentes, **caractérisé en ce que** la source principale de lumière comprend plusieurs éléments émettant de la lumière.

10. Dispositif selon l'une des revendications précédentes, **caractérisé en ce que** le réflecteur (2 ; 12 ; 22) est une face réfléchissante d'une diode électroluminescente organique.

11. Dispositif selon l'une des revendications précédentes, **caractérisé en ce que** la source auxiliaire de lumière comprend plusieurs éléments surfaciques émettant de la lumière, notamment plusieurs diodes électroluminescentes organiques.

12. Dispositif selon l'une des revendications précédentes, **caractérisé en ce que** la source principale de lumière et la source auxiliaire de lumière sont activées simultanément ou indépendamment l'une de l'autre.

13. Dispositif selon l'une des revendications précédentes, **caractérisé en ce que** l'essentiel, voire l'intégralité, d'une fonction d'éclairage et/ou de signalisation est assuré par la source principale.

14. Dispositif selon l'une des revendications précédentes, **caractérisé en ce qu'**il est destiné à assurer une fonction de signalisation d'un véhicule automobile.
